# EUROPEAN PATENT SPECIFICATION

(11) **EP 2 713 759 B1**
(45) Date of publication and mention of the grant of the patent: **18.11.2015**
(21) Application number: 12793260.6
(22) Date of filing: 31.05.2012
(51) Int. Cl.: A23B 4/023, A23L 1/314, A23L 1/317, A23L 1/32, A23L 1/325, A23L 1/24, A23L 2/04, A23L 1/212, A23C 19/09, A23G 3/36, A21D 2/02, A23L 1/315, A23L 1/39, A23L 2/02, A21D 13/00, A21D 13/08, A23L 1/217, A23L 1/237

(54) **CARNALLITE PREPARATION AND USES THEREOF IN EDIBLE APPLICATIONS**
KARNALLITHERSTELLUNG UND VERWENDUNGEN DAVON IN ESSBAREN ANWENDUNGEN
PRÉPARATION DE CARNALLITE ET SES UTILISATIONS DANS APPLICATIONS COMESTIBLES

(30) Priority: 03.06.2011 US 201161493328 P
(43) Date of publication of application: 09.04.2014
(73) Proprietor: ICL Performance Products LP, St. Louis, MO 63141 (US)
(72) Inventor: STACHIW, Nancy, Fenton, MO 63026 (US); HEIDOLPH, Barbara, Bufe, Wentzville, MO 63385 (US); EFFENBERGER, Reinhard, 34367 Haifa (IL); STOVER, Frederick, S., University City, MO 63130 (US); ZHOU, Lirong, St. Louis, MO 63144 (US)
(74) Representative: Kling, Simone
(86) International application number: PCT/US2012/040100
(87) International publication number: WO 2012/166854

(56) References cited:
- WO-A1-03/035550
- WO-A2-2009/117702
- WO-A2-2009/117702
- GB-A- 1 142 901
- US-A1- 2003 080 066
- US-A1- 2003 080 066
- US-A1- 2011 008 243
- US-A1- 2011 064 583
- US-A1- 2011 064 853
- US-A1- 2011 123 420
- US-B1- 6 787 169

## Description

### BACKGROUND

The food industry is under ever increasing pressure to reduce the sodium content of processed foods for health reasons. Sodium has been shown to be related in some studies to increased hypertension. The recommended daily allowable intake is 2300 mg of sodium. A significant percentage of the world's population consumes more sodium than is necessary to maintain a healthy level of sodium in the body. Legislators, regulators, physicians, and health experts have recommended the reduction of sodium in the diet. On a global basis, in most countries including the United States, Canada, Australia, the United Kingdom, Japan, and the European Union, greater than 70% of sodium consumed is in the form of processed foods and not added by consumers during cooking or at the table. Known sodium reduction practices include the use of pure potassium chloride, use of blends of sodium and potassium chloride, use of blends of magnesium chloride or sulfate with potassium chloride or sulfate and sodium chloride, use of blends of magnesium, potassium and sodium chloride, and modification of the physical form of the sodium chloride crystal to enhance "saltiness" such that less sodium chloride can be used in a formulation. (U.S. Patent Appl. No. 12/207,190.) There is also wide use of "sea salts," which are salts produced from evaporated sea water. There are also flavor maskers and enhancers such as autolyzed yeast extract, trehalose, glutathione, ribonucleotides, acids, flavors, and amino acids that allow formulators to cover-up off flavors such as bitterness and/or metallic/mineral flavors associated with various chloride salts used to replace sodium chloride, such as magnesium or potassium chloride or to enhance the saltiness perception. Some of the enhancers, however, also provide a umami flavor that is not appropriate for all food products, such as in a sweet baked good or fruit-flavored yogurts. Further, current sodium reduction practices are often expensive and may none-the-less impart an undesirable taste.

### SUMMARY OF THE INVENTION

The invention is as defined in the claims. The present invention is drawn to a novel Carnallite salt preparation and applications in edible products, such as for reducing the amount of sodium chloride added to an edible product. The present invention is also drawn to a process for producing the Carnallite salt preparation of the invention and methods of producing edible products.

The food grade Carnallite salt preparation comprises a non-synthetic Carnallite, derived from a natural source of Carnallite, which comprises less than 0.25% of ammonia. Such preparation comprises not greater than 20% sodium chloride by weight and not greater than 0.5% bromide by weight. In certain embodiments, a food grade Carnallite salt preparation comprises not greater than 10% sodium chloride by weight and not greater than 0.4% bromide by weight. In certain embodiments, a food grade Carnallite salt preparation comprises not greater than 7% sodium chloride by weight.

In certain embodiments, a food grade Carnallite salt preparation comprises from 25% to 40% magnesium chloride by weight and from 20% to 30% potassium chloride by weight. In certain embodiments, a food grade Carnallite salt preparation comprises from 31% to 35% magnesium chloride by weight and from 21% to 26% potassium chloride by weight.

In certain embodiments, a food grade Carnallite salt preparation comprises not greater than 10 mg/kg of total organic carbon. In certain embodiments, a food grade Carnallite salt preparation comprises a total heavy metals content of not greater than 10 mg/kg. In certain embodiments, a food grade Carnallite salt preparation comprises not greater than 2 mg/kg of lead. In certain embodiments, a food grade Carnallite salt preparation comprises a water insoluble content of not greater than 0.3% by weight or comprises a water insoluble content of not greater than 0.1% by weight.

In certain embodiments, a food grade Carnallite salt preparation is blended with one or more flow aids selected from the group consisting of silicon dioxide, calcium silicate, sodium aluminum silicate, and tricalcium phosphate. In certain embodiments of a food grade Carnallite salt preparation, the particles of the preparation have a size of less than about 10 mm.

In certain embodiments the food grade Carnallite salt preparation comprises a non-synthetic Carnallite that comprises less than 0.25% of ammonia, wherein the preparation comprises not greater than 20% sodium chloride by weight, not greater than 0.5% bromide by weight, from 25% to 40% magnesium chloride by weight, from 20% to 30% potassium chloride by weight, not greater than 10 mg/kg of total organic carbon, not greater than 2 mg/kg of lead, not greater than 10 mg/kg of heavy metals, and a water insoluble content of not greater than 0.3% by weight. In certain embodiments, a food grade Carnallite salt preparation comprises not greater than 10% sodium chloride by weight, not greater than 0.4% bromide by weight, from 31% to 35% magnesium chloride by weight, from 21 % to 26% potassium chloride by weight, not greater than 10 mg/kg of total organic carbon, not greater than 2 mg/kg of lead, not greater than 10 mg/kg of heavy metals, and a water insoluble content of not greater than 0.1% by weight. In certain embodiments, a food grade Carnallite salt preparation comprises not greater than 7% sodium chloride by weight, not greater than 0.4% bromide by weight, from 31% to about 35% magnesium chloride by weight, from 21% to 26% potassium chloride by weight, not greater than 10 mg/kg of total organic carbon, not greater than 2 mg/kg of lead, not greater than 10 mg/kg of heavy metals, and a water insoluble content of not greater than 0.1% by weight.

Certain embodiments of the invention are drawn to an edible product comprising a food grade Carnallite salt preparation, wherein the food grade Carnallite salt preparation comprises a non-synthetic Carnallite that comprises less than 0.25% of ammonia, and wherein the preparation comprises not greater than 20% sodium chloride by weight and not greater than 0.5% bromide by weight. In certain embodiments, the food grade Carnallite salt preparation in an edible product comprises from 25% to 40% magnesium chloride by weight, from 20% to 30% potassium chloride by weight, not greater than 10 mg/kg of total organic carbon, not greater than 2 mg/kg of lead, not greater than 10 mg/kg of heavy metals, and a water insoluble content of not greater than 0.3% by weight. Certain embodiments of the invention are drawn to an edible product comprising any of the Carnallite salt preparations of the invention or blends thereof described or contemplated herein.

In certain embodiments, an edible product is a food product, beverage product, pet food, animal feed, nutraceutical, oral care product, dietary supplement, or pharmaceutical. In certain embodiments, an edible product is selected from the group consisting of baked goods, meats, poultry, seafood, processed fruits, processed vegetables, processed dairy and cheese products, frozen dough or batter, refrigerated dough or batter, desserts, confections, cheeses, butter, yogurt, sauces, dressings, gravies, snacks, soups, prepared foods, grain products, pasta and noodles, rice, chips, crackers, soft drinks, juices, sports drinks, yogurt drinks, flavored water, tea, dairy beverages, condiments, infant foods, diet foods, and geriatric foods, breads, cakes, cookies, muffins, pancakes, waffles, crepes, pizza, cold cuts, eggs and egg dishes, salad dressings, cereals, quickbreads, meat products, poultry products, seafood products, fruit preparations such as jams and jellies or smoothies, frozen or canned fruits, frozen or canned vegetables, table salt, spices, seasonings, throat lozenges, toothpaste, protein drinks, meal replacement beverages, mouthwash, healthcare nutrition-based products, pediatric supplements, geriatric supplements or vitamins.

In certain embodiments, an edible product is a protein-based product and the edible product comprises one or more phosphates selected from the group consisting of sodium phosphates, potassium phosphates, calcium phosphates, and mixed cation phosphates. In certain embodiments, a protein-based product is a meat product, poultry product, seafood product, flour product, dairy product, or soy product.

Certain embodiments of the invention are drawn to a method of preparing an edible product, the method comprising substituting at least part of the sodium chloride in the edible product recipe with a food grade Carnallite salt preparation comprising a non-synthetic Carnallite that comprises less than 0.25% of ammonia, wherein the preparation comprises not greater than 20% sodium chloride by weight and not greater than 0.5% bromide by weight. Certain embodiments of the invention are drawn to a method of preparing an edible product, the method comprising substituting at least part of the sodium chloride in the edible product recipe with any of the food grade Carnallite salt preparations of the invention described or contemplated herein.

In certain embodiment of preparing an edible product, the sodium chloride in the product recipe is reduced by at least 25%. In certain embodiments, the edible product comprises one or more phosphates selected from the group consisting of sodium phosphates, potassium phosphates, calcium phosphates, and mixed cation phosphates.

In certain embodiments of preparing an edible product, the edible product is selected from the group consisting of baked goods, meats, poultry, seafood, processed fruits, processed vegetables, processed dairy and cheese products, frozen dough or batter, refrigerated dough or batter, desserts, confections, cheeses, butter, yogurt, sauces, dressings, gravies, snacks, soups, prepared foods, grain products, pasta and noodles, rice, chips, crackers, soft drinks, juices, sports drinks, yogurt drinks, flavored water, tea, dairy beverages, condiments, infant foods, diet foods, and geriatric foods, breads, cakes, cookies, muffins, pancakes, waffles, crepes, pizza, cold cuts, eggs and egg dishes, salad dressings, cereals, quickbreads, meat products, poultry products, seafood products, fruit preparations such as jams and jellies or smoothies, frozen or canned fruits, frozen or canned vegetables, table salt, spices, seasonings, throat lozenges, toothpaste, protein drinks, meal replacement beverages, mouthwash, healthcare nutrition-based products, pediatric supplements, geriatric supplements or vitamins.

Certain embodiments of the invention are drawn to a salt blend comprising a Carnallite salt preparation and one or more of sodium chloride, potassium chloride, magnesium chloride, potassium sulfate, magnesium sulfate, flavor maskers, or flavor enhancers, wherein the Carnallite salt preparation comprises a non-synthetic Carnallite that comprises less than 0.25% of ammonia and the preparation comprises not greater than 0.5% bromide by weight, and wherein the Carnallite salt preparation contributes no more than 20% of its weight to the total sodium chloride content of the blend. Certain embodiments of the invention are drawn to a salt blend comprising a Carnallite salt preparation and one or more of sodium chloride, potassium chloride, magnesium chloride, potassium sulfate, magnesium sulfate, flavor maskers, or flavor enhancers, wherein the Carnallite salt preparation is any of the Carnallite salt preparations of the invention described or contemplated herein.

In certain embodiments, a salt blend comprises a ratio of from 99% sodium chloride to 1% of a Carnallite salt preparation, by weight, to a ratio of from 1% sodium chloride to 99% of a Carnallite salt preparation, by weight. In certain embodiments, a salt blend comprises one or more flow aids selected from the group consisting of silicon dioxide, calcium silicate, sodium aluminum silicate, and tricalcium phosphate.

Certain embodiments of the invention are drawn to a process of producing a food grade Carnallite salt preparation, the process comprising the steps of transferring sea water from the Dead Sea into a first series of evaporation ponds, evaporating the sea water until sodium salts crystallize and precipitate to the bottom of the ponds, transferring the sea water to a second series of evaporation ponds, further evaporating the sea water until carnallite salts crystallize and precipitate to the bottom of the pond, separating the carnallite crystals from the sea salt solution, and washing the separated carnallite twice to obtain a food grade preparation. In certain embodiments, the washed Carnallite is dried, screened, and sized under food grade conditions. In certain embodiments, the sea water in the first series of evaporation ponds is evaporated until about a 50% reduction in the initial water volume is achieved.

Certain embodiments of the invention provide for a method of reducing the pH of an edible product, the method comprising incorporating into the edible product a food grade Carnallite salt preparation comprising a non-synthetic Carnallite that is substantially free of ammonia, wherein the preparation comprises not greater than about 20% sodium chloride by weight and not greater than about 0.5% bromide by weight.

Certain embodiments of the invention provide for a method of maintaining the level of water activity in an edible product with reduced sodium chloride, the method comprising substituting at least part of the sodium chloride in the edible product recipe with a food grade Carnallite salt preparation comprising a non-synthetic Carnallite that is substantially free of ammonia, wherein the preparation comprises not greater than about 20% sodium chloride by weight and not greater than about 0.5% bromide by weight.

### DETAILED DESCRIPTION

Headings are provided herein solely for ease of reading and should not be interpreted as limiting.

### I. Definitions

The term "sea salt" generally means a chloride salt extracted from sea water. One type of sea salt is a high purity sodium chloride, although other types of sea salts may contain various amounts of other minerals. For purposes of this disclosure, the sea salt of interest is a sea salt derived from the Dead Sea in Israel. The sea salt obtained from the Dead Sea is the mineral "Carnallite," which is a hydrated double mineral salt of potassium and magnesium chloride.

Concentrations, amounts, and other numerical data may be presented here in a range format (e.g., from 5% and 20%). It is to be understood that such range format is used merely for convenience and brevity and should be interpreted flexibly to include not only the numerical values explicitly recited as the limits of the range, but also to include all the individual numerical values or subranges encompassed within that range, as if each numerical value and subrange is explicitly recited. For example, a range of from 5% to 20% should be interpreted to include numerical values such as, but not limited to, 5%, 5.5%, 9.7%, 10.3%, 15%, etc., and subranges such as, but not limited to, 5% to 10%, 10% to 15%, 8.9% to 18.9%, etc.

Unless otherwise specified, percentages represent percent by weight.

### II. Overview

The present invention provides for a Carnallite salt preparation without high levels of sodium chloride that performs well as a sodium chloride (NaCl) substitute in a variety of edible products such as food, beverage, dietary supplement, nutraceutical, pet food, and animal feed products, and which may allow formulators to achieve dietary targets for sodium reduction. The chemical formula of Carnallite is KCl•MgCl₂•6H₂O or KMgCl₃•6H₂O. Although synthetically produced ammonium Carnallite (MgCl₂•xKCl•yNH₄Cl•zH₂O wherein x + y is about 1, wherein x is greater than or equal to zero and less than 1, wherein y is greater than zero and less than or equal to 1 and wherein z is from about 4 to about 6 and blends have been developed as food salt products (U.S. Patent No. 6,787,169), naturally occurring Carnallite has been thought to be unsuitable for edible products (U.S. Patent No. 6,787,169 and WO 2009/117702). It has been unexpectedly discovered that Carnallite isolated from the waters of the Dead Sea in Israel can be processed into a food grade product suitable for human and animal consumption. This Carnallite salt preparation comprises non-synthetically produced Carnallite that is substantially ammonia free, and the preparation is characterized by an acceptable flavor, low production costs, beneficial impact on water activity, negligible pH buffering capacity, source of acidity that reduces the pH, and which contributes positively to the daily required intake of magnesium and potassium. Significantly, although it is reported that natural Carnallite deposits normally contain quantities of coprecipitated bromide unacceptable for use as an edible product (U.S. Patent No. 6,787,169), the Carnallite salt preparation of the present invention, when incorporated into an edible product, results in a bromide content that is within the range of bromine consumed in the typical daily diet. The present invention also provides for food and beverage products, pet and animal foods, and dietary supplements, oral care, nutraceutical and pharmaceutical products containing the Carnallite salt preparation and methods for preparing such edible products.

Current sodium reduction generally relies on simple NaCl reduction, resulting in unacceptable palatability in terms of saltiness, or use of potassium chloride as a substitute, resulting in less desirable flavor and higher costs. The flavor of the Carnallite salt preparation of the present invention when compared to reduced NaCl or KCI substitution is favorable. In particular, the Carnallite salt preparation of the present invention has been described as tasting less bitter than other sodium substitutes and in some uses, saltier than control sodium chloride products.

It is believed that the Carnallite salt preparation also has advantageous modifying properties in certain food products such as cheese sauces. In meat, poultry and seafood applications, the Carnallite salt preparation is understood to benefit both functional and sensory characteristics including pH and certain flavor attributes. The control of pH in meat, poultry and seafood products impacts overall product yield and shelf life. In certain baked goods, the Carnallite salt preparation delivers texture that is beneficial, for example, a short texture in high protein flour biscuits. Carnallite may also aid in leavening gas evolution in systems that may normally be slow in rate, such as Levona® Opus calcium acid pyrophosphate (CAPP) and Levn-Lite® sodium aluminum phosphate (SALP), which are trademarks of ICL Performance Products LP, St. Louis, MO. Furthermore, the Carnallite salt preparation appears to brighten the color of dough, which is particularly advantageous in a chemically leavened system that has a high pH and with flour that has a high polyphenoloxidase (PPO) content or ash value. Carnallite may cause a baked good, dough, or batter system to be lower in pH, similar to what is seen in a bleached flour formulation, without bleaching which is restricted in some regions, such as Japan. Magnesium - a divalent cation present in the Carnallite salt preparation - may aid in dough development time as is known for divalent cations.

It has been discovered that the Carnallite salt preparation provides acidity in an edible product formulation without the addition of acid. Thus, in many applications, the Carnallite salt preparation may create a lower pH in the edible product. Lower pH is known to enhance saltiness in edible products, even when sodium chloride is reduced in the formulation. The elemental composition of the Carnallite salt preparation also advantageously provides the nutrients magnesium and potassium.

The Carnallite salt preparation of the invention may cause feline foods to be preferred due to pH reduction. Feline formulations may also contain higher levels of potassium due to the inclusion of Carnallite salt preparation which may lead to lower incidence of feline urinary tract disease due to formation of struvite or calcium oxalate crystals in the bladder and renal pathway.

### III. Carnallite Salt Preparation

The Carnallite salt preparation of the invention comprises a non-synthetic Carnallite obtained from a natural source. The Carnallite is substantially ammonia free (less than 0.25%) and the Carnallite salt preparation is not high in sodium chloride content. In certain embodiments, the Carnallite salt preparation comprises less than 20% sodium chloride, less than 10% sodium chloride, less than about 9% sodium chloride, less than about 8% sodium chloride, less than 7% sodium chloride, less than about 6% sodium chloride, or less than about 5% sodium chloride by weight.

In certain embodiments, the Carnallite salt preparation is prepared as a food grade preparation. A food grade preparation is one that meets a chemical quality that is safe for consumption by humans and pets or other animals. In certain embodiments, a food grade preparation has a magnesium chloride (MgCl₂) content of about 25% to about 40%. In certain embodiments, a food grade preparation has a magnesium chloride (MgCl₂) content of about 31% to about 35%. In certain embodiments, a food grade preparation has a potassium chloride (KCI) content of about 20% to about 30%. In certain embodiments, a food grade preparation has a potassium chloride (KCI) content of about 21 % to about 26%. In certain embodiments, a food grade preparation has a bromide (Br) content of not greater than about 0.5%. In certain embodiments, a food grade preparation has a bromide (Br) content of not greater than about 0.4%. In certain embodiments, a food grade preparation has a total organic carbon content of not greater than about 10 mg/kg. In certain embodiments, a food grade preparation has a lead (Pb) content of not greater than about 2 mg/kg. In certain embodiments, a food grade preparation has a total heavy metals content of not greater than about 10 mg/kg (as lead, Pb). In certain embodiments, a food grade preparation has a water insoluble content of not greater than 0.3%. In certain embodiments, a food grade preparation has a water insoluble content of not greater than 0.1%. In certain embodiments, a food grade preparation satisfies one or more of the above criteria and comprises less than about 20%, 10%, 9%, 8%, 7%, 6%, or 5% sodium chloride. In certain embodiments, a food grade preparation satisfies all of the above criteria for MgCl₂, KCI, Br, total organic carbon, Pb, heavy metals, and water insolubles, and comprises less than about 20%, 10%, 9%, 8%, 7%, 6%, or 5% sodium chloride.

For illustrative purposes, the composition of the Dead Sea seawater as determined in the year 2009 was reported as:

| | |
|---|---|
| KCl | 1.27% |
| NaCl | 6.77% |
| MgCl₂ | 15.55% |
| CaCl₂ | 4.23% |
| Salinity | 28% |
| Density | 1.24 t/m³ |
| Temp. | 35.0 °C |
| Posm | 183 bar |

In certain embodiments, the Carnallite salt preparation of the invention is separated with sizing screens such that the particles of the preparation are less than about 10 mm in size. In certain embodiments, the particle size is a subfraction thereof, such as the particles of the Carnallite salt preparation are between 0.2 mm and about 0.6 mm, or between about 0.6 mm and about 1.7 mm, or between about 1.7 mm and about 9 mm in size.

### IV. Producing Carnallite Salt Preparation

The Carnallite salt preparation of the present invention is produced through the evaporation of water resulting in the precipitation of minerals from sea water on the bottom of evaporation ponds, dredging the minerals from the bottom of the ponds, and processing by screening, washing, drying, and sizing to the final product of a food grade Carnallite salt preparation.

An essential part of the process of producing the Carnallite salt preparation is maximizing the precipitation of sodium chloride in a series of ponds in order to minimize the amount of sodium chloride (NaCl) left to precipitate in the ponds in which raw Carnallite is harvested. From a source of water containing dissolved Carnallite-such as sea water from the Dead Sea-water is transferred into a first series of evaporation ponds. The water is evaporated from these ponds until about a 50% reduction in the initial water volume is achieved; resulting in sodium salts crystallizing and precipitating to the bottom of the ponds. Evaporation may occur via solar evaporation or be aided by applying artificial heat or agitation. The remaining solution resulting after crystallization of the sodium salts-containing a minimal content of NaCl-is transferred to another series of evaporation ponds. The solution is further concentrated resulting in crystallization and precipitation of the Carnallite to the bottom of the ponds. The Carnallite crystals can then be removed from the ponds and separated from the solution resulting in a damp, raw Carnallite crystal product. Unlike the common method of making fertilizer Carnallite, in which the raw Carnallite is immediately dried and packed out, this preparation of the present invention is processed further to produce a Carnallite salt preparation suitable as a sodium substitute. To make a food grade Carnallite salt preparation, the raw Carnallite undergoes screening, two washing steps and is then dried, sized, and packaged under food grade conditions.

### V. Edible Product Applications

The Carnallite salt preparation of the present invention can be used as a salt replacement in a wide variety of edible products such as, but not limited to, food, beverage, dietary supplement, oral care, nutraceutical, pet food, animal feed, and pharmaceutical products. Nonlimiting representative examples include baked goods, meats, poultry, seafood, processed fruits, processed vegetables, processed dairy and cheese products, frozen dough or batter, refrigerated dough or batter, desserts, confections, cheeses, butter, yogurt, sauces, dressings, gravies, snacks, soups, prepared foods, grain products, pasta and noodles, rice, chips, crackers, soft drinks, juices, sports drinks, yogurt drinks, flavored water, tea, dairy beverages, condiments, infant foods, diet foods, and geriatric foods, breads, cakes, cookies, muffins, pancakes, waffles, crepes, pizza, cold cuts, eggs and egg dishes, salad dressings, cereals, quickbreads, meat products, poultry products, seafood products, fruit preparations such as jams and jellies or smoothies, frozen or canned fruits, frozen or canned vegetables, table salt, spices, seasonings, throat lozenges, toothpaste, protein drinks, meal replacement beverages, mouthwash, healthcare nutrition-based products, pediatric and geriatric supplements and vitamins.

Certain embodiments of the invention provide for an edible product comprising the Carnallite salt preparation. In certain embodiments, the edible product comprises not greater than about 5%, not greater than about 3%, or not greater than about 1% of the Carnallite salt preparation. It has been discovered that such edible products may be formulated with a Carnallite salt preparation to reduce, minimize, or eliminate bitter, metallic/mineral, or other off tastes, for example, but not exclusively, while reducing sodium content typically by reducing sodium chloride in the formulation. This is advantageous as conventional sodium replacers often exhibit bitter or other undesirable taste characteristics. Table 1. (Pfaffmann, 1959).

**Table 1.**

| | Primary Taste | Secondary Taste |
|---|---|---|
| Sodium Chloride | Salty | Sweet (low concentration) Burn (high concentration) |
| Potassium Chloride | Bitter | Salty Metallic Sweet (low concentration) |
| Calcium Chloride | Very Bitter | Sour Sweet Salty |
| Magnesium Chloride | Salty Bitter | |

In certain embodiments, the edible products comprise sodium chloride. In certain embodiments, the edible products comprise another salt substitute, such as potassium chloride, with or without flavor maskers and enhancers.

Certain embodiments provide for methods for preparing edible products having a reduced sodium content wherein part or all of the sodium chloride called for in a recipe or otherwise generally used in preparation of the product that is removed is replaced by the Carnallite salt preparation. In certain embodiments, an amount of the Carnallite salt preparation that is greater than the amount of sodium chloride removed, is added. In certain embodiments, an amount of the Carnallite salt preparation that is less than the amount of sodium chloride removed is added. In certain embodiments, the edible products have a similar salt perception and/or similar other sensory aspects as compared with full sodium formulations. In certain embodiments, replacement of sodium chloride with the Carnallite salt preparation does not alter, or only slightly alters, physical characteristics of the product other than taste. In certain embodiments, replacement of sodium chloride with the Carnallite salt preparation improves physical characteristics of the product other than taste. In certain embodiments, the sodium chloride content may be reduced by a certain amount such as by about 5%, 10%, 15%, 20%, 25%, 30%, 35%, 40%, 45%, or 50% or greater. For example, the sodium content may be reduced by 25% - the U.S. Food and Drug Administration ("FDA") minimum for applying the label "reduced sodium" to a product. One of skill in the art will recognize that the amount of sodium chloride that can be replaced will depend on the type of application and can be determined by taste testing. The Carnallite salt preparation can also be used to replace potassium chloride, magnesium chloride, magnesium sulfate, potassium sulfate, and any other sodium chloride replacers called for or used in a recipe. When the Carnallite salt preparation is used, flavor enhancers or maskers that are part of the food, beverage, dietary supplement, oral care product, nutraceutical, pet food, animal feed, or pharmaceutical product may be reduced or eliminated from the reformulated reduced sodium product. One of skill in the art will also recognize that certain other ingredients, such as flavors, sweeteners, spices, acids, acidic salts, and seasonings, may be utilized to enhance the sodium chloride replacing properties of the Carnallite salt preparation of the invention. Further, one of skill in the art will recognize that although it is convenient to refer to the use of the Carnallite salt preparation in terms of a replacement of sodium chloride, recipes may be developed using the Carnallite salt preparation without a baseline level of sodium chloride or sodium to compare with.

In certain embodiments, such as in protein-based edible products, phosphates, such as sodium phosphates, potassium phosphates, calcium phosphates, or mixed cation phosphates are added to the edible product comprising the Carnallite salt preparation. The addition of phosphates may help to impart a smoother texture to the product or improved texture. Representative, non-limiting examples of protein-based edible products include meats, poultry, seafood, flour products, dairy and soy products.

In certain embodiments, the addition of the Carnallite salt preparation may be used to adjust the pH of an edible product. For example, the addition of the Carnallite salt preparation may reduce the final pH of an edible product. In certain embodiments where the amount of sodium chloride in an edible product recipe is reduced, the Carnallite salt preparation of the invention may be substituted to maintain an equivalent level of water activity.

### VI. Carnallite Salt Blends

In certain embodiments of the present invention, the Carnallite salt preparation may be blended to form a blended product with other salts or flavor enhancers or flavor maskers for use in, for example, edible products as a seasoning blend or for topical applications such as on French fries, crackers, snack chips, pretzels, and popcorn. In certain embodiments of the invention, sodium chloride is blended with the Carnallite salt preparation in a ratio of from about 99% to 1% of sodium chloride to the Carnallite salt preparation to about 1% to 99% of sodium chloride to the Carnallite salt preparation by weight. In certain embodiments of the invention, sodium chloride is blended with the Carnallite salt preparation in a ratio of from about 77% to 33% of sodium chloride to the Carnallite salt preparation to about 50% to 50% of sodium chloride to the Carnallite salt preparation by weight. In certain embodiments of the invention, sodium chloride is blended with the Carnallite salt preparation in a ratio of from about 35% to 65% of sodium chloride to the Carnallite salt preparation to about 65% to 35% of sodium chloride to the Carnallite salt preparation by weight.

In certain embodiments, the Carnallite salt preparation may be blended with other sodium replacers such as potassium chloride, magnesium chloride, potassium sulfate, magnesium sulfate, and/or flavor maskers and enhancers such as autolyzed yeast extract, trehalose, glutathione, ribonucleotides, acids, acid salts, flavors, and amino acids. Blends may be produced wherein the ratio of Carnallite salt product to other replacers, enhancers, or maskers, is a ratio of from about 99% to about 1% to a ratio of about 1% to about 99%, and any ratios falling within such ranges.

In certain embodiments, the Carnallite salt preparation may include, be blended with, packaged, etc., with flow aids, such as, but not limited to, silicon dioxide, calcium silicate, sodium aluminum silicate, and tricalcium phosphate, to maintain flow. In certain embodiments, a salt blend of the invention may include, be blended with, packaged, etc., with flow aids, such as, but not limited to, silicon dioxide, calcium silicate, sodium aluminum silicate, and tricalcium phosphate, to maintain flow.

### VII. Examples

The following disclosed embodiments are merely representative of the invention which may be embodied in various forms. Thus, specific structural, functional, and procedural details disclosed in the following examples are not to be interpreted as limiting.

For the following Examples, a non-limiting embodiment of a composition representative of a Carnallite salt preparation of the invention used in the formulations had the following composition:

| | |
|---|---|
| Magnesium Chloride, MgCl₂, % | 33.4 |
| Potassium Chloride, KCl, % | 23.7 |
| Sodium Chloride, NaCl, % | 4.6 |
| Bromide, Br, % | 0.37 |
| Water Insolubles, % | 0.02 |
| Sizing, USSS, Retained on a 20 Mesh, % | 11.4 |

### Example 1: Cheese Sauce

Two 25% sodium reduced cheese sauces were made using potassium chloride (KCI) or the Carnallite salt preparation of the present invention, together with a sodium chloride (NaCl) control cheese sauce. The three samples were evaluated by untrained sensory panelists. Table 2 lists the compositions of the tested cheese sauces.

**Table 2. 25% Sodium Reduced Cheese Sauce Formulations**

| | Sample 1 | Sample 2 | Sample 3 |
|---|---|---|---|
| Ingredient | NaCl Control | 25% Sodium Reduction +1x KCl | 25% Sodium Reduction +1x Carnallite Salt Preparation |
| Butter (no salt) | 26.1 g | 26.1 g | 26.1 g |
| Flour | 10.5 g | 10.5 g | 10.5 g |
| Cheddar cheese | 195 g (1253.55 mg Na) | 195 g (1253.55 mg Na) | 195 g (1253.55 mg Na) |
| NaCl | 8.4 g (3301.2 mg Na) | 4.3 g (1690 mg Na) | 4.12 g (1619 mg Na) |
| KCI | ----- | 4.1 g (0 Na) | ----- |
| Carnallite Salt Preparation | ----- | ----- | 4.28 g (70.62 mg Na) |
| Whole milk | 210 g | 210 g | 210 g |
| Phosphates (Disodium Phosphate) | 5.85 g DSP (1889.55 mg Na) | 5.85 g DSP (1889.55 mg Na) | 5.85 g DSP (1889.55 mg Na) |
| Total weight | 455.85 g | 455.85 g | 455.85 g |
| Final weight | about 400 g | about 400 g | about 400 g |
| pH (as is) | 5.84/5.84 | 5.75/5.78 | 5.77/5.78 |
| Sodium level | **6444.3** mg Na total 933 mg / 66 g serving | **4833.2** mg Na total 700 mg /66 g serving | **4833.2** mg Na total 700 mg / 66 g serving |

Untrained sensory panelists reported that both reduced sodium sauces tasted less salty than the sodium chloride control sauce. Compared to each other, the potassium chloride reduced sodium sauce and the Carnallite salt preparation reduced sodium sauce had similar saltiness. The addition of the Carnallite salt preparation slightly reduced the pH of the sauce from pH 5.84 to pH 5.78, similar to potassium chloride. The sauce prepared with the Carnallite salt preparation did not have a smooth texture that is desirable with consumers. This is possibly due to the high level of magnesium (Mg) in the Carnallite salt preparation.

To improve the texture of cheese sauce prepared with the Carnallite salt preparation, sauces were prepared with the polyphosphate SKMP (Benephos^{®}, ICL Performance Products LP, St. Louis, MO) in order to chelate magnesium. Table 3 lists the compositions of the tested cheese sauces with polyphosphate.

**Table 3. 25% Sodium Reduced Cheese Sauce Formulations - DSP and SKMP Added**

| | Sample 1 | Sample 2 | Sample 3 |
|---|---|---|---|
| Ingredient | 25% Sodium Reduction +1x Carnallite Salt Preparation With DSP only | 25% Sodium Reduction +1x Carnallite Salt Preparation With 1:1 DSP:SKMP | 25% Sodium Reduction +1x KCl With DSP only |
| Butter (no salt) | 26.1 g | 26.1 g | 26.1 g |
| Flour | 10.5 g | 10.5 g | 10.5 g |
| Cheddar cheese | 195 g (1253.55 mg Na) | 195 g (1253.55 mg Na) | 195 g (1253.55 mg Na) |
| NaCl | 4.12 g (1619 mg Na) | 4.12 g (1619 mg Na) | 4.3 g (1690 mg Na) |
| KCI | ----- | ----- | 4.1 g (0 Na) |
| Carnallite Salt Preparation | 4.28 g (70.62 mg Na) | 4.28 g (70.62 mg Na) | ----- |
| Whole milk | 210 g | 210 g | 210 g |
| Phosphate s | 5.85 g DSP (1889.55 mg Na) | 2.93 g DSP (946 mg Na) | 5.85 g DSP (1889.55 mg Na) |
| | | 2.92 g SKMP (234 mg Na) | |
| Total Na | 4832.5 mg | 4123.2 mg | 4833.1 mg |

| Color | | | |
|---|---|---|---|
| L | 72.89 | 74.46 | 73.82 |
| A | -0.85 | -0.42 | -0.87 |
| B | 32.24 | 32.84 | 32.26 |
| Viscosity (cps) | 5,590,000 | 11,200,000 | 4,900,000 |
| pH (as is) | 5.91/5.93 | 5.45/5.46 | 6.02/6.03 |

Addition of polyphosphate (SKMP) improved the texture of the cheese sauce containing the Carnallite salt preparation, resulting in a smoother mouth-feel. The addition of SKMP lowered the cheese pH and increased cheese viscosity. All of the samples had similar color. Although the test sauces with the Carnallite salt preparation had poor heat stability, it was further determined that adding more polyphosphate increased the heat stability of the sauce.

### Example 2: Biscuit

Two batches of 25% sodium reduced biscuits were made, one using KCI and one with the Carnallite salt preparation of the present invention. The sodium reduced biscuits were compared to a control (NaCl) biscuit. The biscuits were tested by untrained sensory panelists. Two sets of triangle tests were conducted: control vs. Carnallite and KCI vs. Carnallite. Table 4 lists the compositions of the tested biscuits.

**Table 4. 25% Sodium Reduced Biscuit Formulations**

| Ingredient | Control | 25% Sodium Reduction with KCl | 25% Sodium reduction with Carnallite Salt Preparation |
|---|---|---|---|
| Flour | 387 g | 387 g | 387 g |
| Shortening | 58 g | 58 g | 58 g |
| Nonfat dry milk | 27 g | 27 g | 27 g |
| Sugar | 8g | 8 g | 8 g |
| Salt | 8 g NaCl | 4.2 g NaCl | 4.03 g NaCl |
| | | 3.8 g KCl | 3.97 g Carnallite Salt Preparation |
| | (3120 mq Na) | (1640 mg Na) | (1640 mg Na) |
| Baking soda | 5g (1370 mg Na) | 5 g (1370 mg Na) | 5 g (1370 mg Na) |
| SAPP 28 | 7g (1450 mg Na) | 7g (1450 mg Na) | 7g (1450 mg Na) |
| pH (10 g biscuit + 20 g DI water) | 7.33 | 7.36 | 7.10 |
| Total Na | 5940 mg | 4460 mg | 4460 mg |

Four of seven untrained sensory panelists were unable to tell the difference between the control (NaCl) and Carnallite biscuits. Five of seven untrained sensory panelists were unable to tell the difference between the KCl and Carnallite biscuits. It was observed that the addition of the Carnallite salt preparation lowered the biscuit pH and biscuits with the Carnallite salt preparation were lighter in color after the same amount of baking time.

### Example 3: Tomato Juice

Four tomato juices were made from fresh tomatoes for testing. The juices were taste tested by untrained sensory panelists. Table 5 lists the compositions of the tested tomato juices.

**Table 5. 50% Sodium Reduced Tomato Juice Formulations**

| Group | Treatment | Sodium level (per 240 g) | pH |
|---|---|---|---|
| 1. Control | 1.52 g NaCl/240 g juice | 600 mg | 4.65 |
| 2. 50% NaCl reduction | 0.76 g NaCl/240 g juice | 300 mg | 4.67 |
| 3. 50% NaCl reduction +1x Carnallite Salt Preparation | 0.76 g NaCl + 0.76 g Carnallite Salt Preparation/240 g juice | 312 mg | 4.48 |
| 4. 50% NaCl reduction +0.5x Carnallite Salt Preparation | 0.76 g NaCl + 0.38 g Carnallite Salt Preparation/240 g juice | 306 mg | 4.56 |

The majority of untrained sensory panelists ranked the order of saltiness as: 1 > 3 > 4 > 2. Group 2 and group 4 were reported to be very close in saltiness. The untrained sensory panelists reported that the juices containing the Carnallite salt preparation had little or no off flavor. Addition of the Carnallite salt preparation lowered the juice pH. No significant differences in color or consistency between NaCl and Carnallite juices were visually observed.

### Example 4: French Fries

Store purchased French fries without added salt were prepared according to the instructions. A single layer of fries were baked at 450 °F for about 20 minutes. Fries were divided into three batches of about 350 g per batch:
Batch 1. NaCl Control: 3 g of NaCl were mixed well with the fries.
Batch 2. 25% NaCl reduction +1x KCl: 2.25 g of NaCl and 0.75 g KCI were mixed well with the fries. (NaCl and KCl were blended together before addition to fries.)
Batch 3. 25% NaCl reduction +1x Carnallite salt preparation of the present invention: 2.25 g of NaCl and 0.75 g of the Carnallite salt preparation were mixed well with the fries. (The Carnallite salt preparation was ground to a particle size similar to the particle size of NaCl table salt and blended with NaCl before addition to fries.)
   The French fries were taste tested by untrained sensory panelists. Two sets of triangle tests were conducted: NaCl vs. Carnallite and KCl vs. Carnallite. Two of nine untrained sensory panelists were able to distinguish between the NaCl control batch and the reduced sodium fries with the Carnallite salt preparation. Five of nine untrained sensory panelists were able to distinguish between the reduced sodium fries with KCl and the reduced sodium fries with the Carnallite salt preparation. The majority of the five untrained sensory panelists that were able to distinguish between the KCl and Carnallite batches reported that the KCl batch tasted less salty than the Carnallite batch.

### Example 5: 25% Sodium Reduction in Chicken Broth

**Table 6. 25% Reduced Sodium Chicken Broth Formulations**

| | 1 | | 2 | | 3 | | 4 | |
|---|---|---|---|---|---|---|---|---|
| Batch Size (g) = 100 | Control | | 25% Sodium Reduction | | 25% Sodium Reduction + 1x KCl | | 25% Sodium Reduction + 1x Carnallite Salt Preparation | |
| Ingredient | (%) | (gm) | (%) | (gm) | (%) | (gm) | (%) | (gm) |
| No-Salt Chicken Broth | 99.20% | 99.20 | 99.44% | 99.44 | 99.20% | 99.20 | 99.20% | 99.20 |
| Salt, flour (not iodized) | 0.80% | 0.80 | 0.56% | 0.56 | 0.56% | 0.56 | 0.55% | 0.55 |
| Carnallite Salt Preparation | 0.00% | 0.00 | 0.00% | 0.00 | 0.00% | 0.00 | 0.25% | 0.25 |
| Potassium Chloride | 0.00% | 0.00 | 0.00% | 0.00 | 0.24% | 0.24 | 0.00% | 0.00 |
| TOTAL | 100.00% | 100.00 | 100.00% | 100.00 | 100.00% | 100.00 | 100.00% | 100.00 |

Serving size is 1 cup = 236 g.

Three 25% reduced sodium chicken broths were prepared and compared to a control. In this example, the control sodium level was based on a commercially available, non-reduced sodium chicken broth with 860 mg of sodium per cup. For comparison, the baseline sodium level in a commercially available no-salt added chicken broth was 130 mg of sodium per cup. The samples were made just prior to tasting to prevent bacterial growth and were refrigerated prior to analytical testing.

Multiple cans of no-salt added chicken broth were obtained from a commercial source. All of the broth was shaken out of the cans and combined in a central holding container. While whisking vigorously to keep fat evenly distributed, aliquots of broth (by weight) were poured into jars or bottles. The appropriate amount of salt and/or replacer was added in each jar/bottle to create desired formulations (Table 6). The lids were screwed on and containers were shaken, not stirred, well to dissolve the salts.

Testing was done by a panel of professionally trained sensory panelists and by a panel of untrained sensory panelists. The panelists in both panels were instructed to score a number of sensory characteristics on a scale of 0-60. A control chicken broth formulation was first tasted with the full sodium chloride content added and the proper point value anchored on the 60 point scale for each characteristic. The panelists were then provided with a number of blind formulations, including a blind control. For each formulation, each of the panelists scored the characteristics versus the control. The results were analyzed with a variety of statistical tests to determine their statistical significance.

The formulations tested were (1) control (no NaCl removed), (2) a 25% NaCl reduction with nothing added back, (3) a 25% NaCl reduction with an equal weight (1x) of KCl added back, and (4) a 25% NaCl reduction with an equal weight (1x) of the Carnallite salt preparation of the present invention added back, adjusted for NaCl in the Carnallite (Table 6).

According to the professionally trained panelists, compared to the blind control (no NaCl removed), the nothing added back formulation was less salty whereas the formulations in which either the Carnallite salt preparation or KCI was added back were not perceived as different from the full NaCl control. This is evidence that the Carnallite salt preparation can substitute for NaCl in food products. Further, the Carnallite salt preparation was indistinguishable in this respect to KCl which is commonly used as a NaCl substitute. Results from the untrained panelists indicated no statistically significant difference in the chicken broth formulations.

Both the Carnallite salt preparation and KCI were reported by the professionally trained panelists to impart a clear, but not strong, metal/mineral taste. Again, the Carnallite salt preparation was indistinguishable in this respect to KCl. Also, both the Carnallite salt preparation and KCl scored lower on chicken flavor intensity compared to NaCl, but likewise could not be distinguished from each other. For all other sensory characteristics tested, there were no statistically significant differences found between any of the formulations. Thus, the addition of the Carnallite salt preparation did not affect the aroma, color, turbidity, surface fat, astringency, bitterness, balance, nor overall acceptability of the broth.

### Example 6: 50% Sodium Reduction in Chicken Broth

**Table 7(a). 50% Reduced Sodium Chicken Broth Formulations**

| | 1 | | 2 | | 3 | |
|---|---|---|---|---|---|---|
| Batch Size (g) = 100 | Control | | 50% Sodium Reduction | | 50% Sodium Reduction + 1x KCl | |
| Ingredient | (%) | (gm) | (%) | (gm) | (%) | (gm) |
| No Salt Chicken Broth | 99.20% | 99.20 | 99.67% | 99.67 | 99.20% | 99.20 |
| Salt, flour (not iodized) | 0.80% | 0.80 | 0.33% | 0.33 | 0.33% | 0.33 |
| Carnallite salt preparation | 0.00% | 0.00 | 0.00% | 0.00 | 0.00% | 0.00 |
| Potassium Chloride | 0.00% | 0.00 | 0.00% | 0.00 | 0.47% | 0.47 |
| TOTAL | 100.00% | 100.00 | 100.00% | 100.00 | 100.00% | 100.00 |

**Table 7(b). 50% Reduced Sodium Chicken Broth Formulations**

| | 1 | | 4 | | 5 | |
|---|---|---|---|---|---|---|
| Batch Size (g) = 100 | Control | | 50% Sodium Reduction +1x Carnallite | | 50% Sodium Reduction +0.5x Carnallite | |
| Ingredient | (%) | (gm) | (%) | (gm) | (%) | (gm) |
| No Salt Chicken Broth | 99.20% | 99.20 | 99.20% | 99.20 | 99.44% | 99.44 |
| Salt, flour (not iodized) | 0.80% | 0.80 | 0.31% | 0.31 | 0.32% | 0.32 |
| Carnallite salt preparation | 0.00% | 0.00 | 0.49% | 0.49 | 0.24% | 0.24 |
| Potassium Chloride | 0.00% | 0.00 | 0.00% | 0.00 | 0.00% | 0.00 |
| TOTAL | 100.00% | 100.00 | 100.00% | 100.00 | 100.00% | 100.00 |

Serving size is 1 cup = 236 g.

Four 50% reduced sodium chicken broths were prepared and compared to a control. In this example, the control sodium level was based on a commercially available, non-reduced sodium chicken broth with 860 mg of sodium per cup. For comparison, the baseline sodium level in a commercially available, no-salt added chicken broth was 130 mg of sodium per cup. The samples were made just prior to tasting to prevent bacterial growth and were refrigerated prior to analytical testing.

Multiple cans of no-salt added chicken broth were obtained from a commercial source. All of the broth was shaken out of the cans and combined in a central holding container. While whisking vigorously to keep fat evenly distributed, aliquots of broth (by weight) were poured into jars or bottles. The appropriate amount of salt and/or replacer was added in each jar/bottle to create desired formulations (Tables 7(a) and 7(b)). The lids were screwed on and containers were shaken well to dissolve salts.

Testing was done by a panel of professionally trained sensory panelists and by a panel of untrained sensory panelists. The panelists in both panels were instructed to score a number of sensory characteristics on a scale of 0-60. A control chicken broth formulation was first tasted with the full sodium chloride content added and the proper point value anchored on the 60 point scale for each characteristic versus the control. The panelists were then provided with a number of blind formulations including a blind control. For each formulation, each of the panelists scored the characteristics. The results were analyzed with a variety of statistical tests to determine their statistical significance.

The formulations tested were (1) control (no NaCl removed), (2) a 50% NaCl reduction with nothing added back, (3) a 50% NaCl reduction with an equal weight (1x) of KCI added back, (4) a 50% NaCl reduction with an equal weight (1x) of the Carnallite salt preparation of the present invention added back, adjusted for NaCl in the Carnallite, and (5) a 50% NaCl reduction with the weight of the Carnallite salt preparation added back equal to half of the weight (0.5x) of NaCl removed, adjusted for NaCl in the Carnallite (Tables 7(a) and 7(b)).

Results from the professional panelists indicated that the nothing added back formulation was much less salty than the control, as expected. The full KCI add back was not detectably less salty than the control; however, both formulations of the Carnallite salt preparation added back (50% and 100% of the weight of NaCl removed added back) were reported to be moderately to largely less salty than the control.

Although in this application, adding back half the amount of NaCl removed as the Carnallite salt preparation did not fully restore the saltiness of NaCl that was removed, the bitterness and metallic/mineral characteristics were not different from the control. In comparison, KCI added back was not different in bitterness compared to the control, but did have a stronger metallic/mineral component compared to the control.

The formulation with all of the removed NaCl added back as the Carnallite salt preparation had a clear, but not largely, more bitter and more metallic taste than control. The half Carnallite added back formulation had a less intense chicken flavor than the control as did formulation 2, the no add back 50% reduction in NaCl. Both formulations of the Carnallite salt preparation were indistinguishable from KCI for all of the characteristics except saltiness, where the half Carnallite formulation was clearly less salty than KCI, but the 1x Carnallite formulation, number 4, was equal in all aspects to the KCI formulation including saltiness. For aroma, color, turbidity, and fat, the Carnallite formulations were not different from the control.

Results from the untrained panelists indicated that they could not tell the difference between the formulations containing the Carnallite salt preparation and the formulations containing KCI from the control. The untrained panelists could not tell a difference between the Carnallite salt preparation formulations and the KCI formulation based on saltiness. The panelists reported KCI to have a moderately larger bitterness compared to the control, whereas the half Carnallite formulation was not significantly different in bitterness compared to the control. KCI was found to have a moderately stronger metal/mineral taste than the control, whereas the Carnallite salt preparation formulations did not. The half Carnallite formulation was reported as clearly less metallic than the KCI formulation.

### Example 7: 25% Sodium Reduction in Tortillas

**Table 8(a). 25% Reduced Sodium Tortilla Formulations**

| | 1 | | 2 | | 3 | |
|---|---|---|---|---|---|---|
| Batch Size (g) = 2000 | Control | | 25% Sodium Reduction | | 25% Sodium Reduction +1x KCI | |
| Ingredient | (%) | (gm) | (%) | (gm) | (%) | (gm) |
| Bread flour | 57.95% | 1159.00 | 58.35% | 1167.00 | 57.94% | 1158.80 |
| Water | 34.12% | 682.40 | 34.12% | 682.40 | 34.12% | 682.40 |
| Soybean Oil | 5.53% | 110.60 | 5.53% | 110.60 | 5.53% | 110.60 |
| Salt | 1.23% | 24.60 | 0.83% | 16.60 | 0.83% | 16.60 |
| Levn-Lite® SALP | 0.40% | 8.00 | 0.40% | 8.00 | 0.40% | 8.00 |
| Soda | 0.40% | 8.00 | 0.40% | 8.00 | 0.40% | 8.00 |
| Calcium Proprionate | 0.12% | 2.40 | 0.12% | 2.40 | 0.12% | 2.40 |
| Encapsulated Fumaric Acid | 0.25% | 5.00 | 0.25% | 5.00 | 0.25% | 5.00 |
| Carnallite Salt Preparation | 0.00% | 0.00 | 0.00% | 0.00 | 0.00% | 0.00 |
| Potassium Chloride | 0.00% | 0.00 | 0.00% | 0.00 | 0.41% | 8.20 |
| TOTAL | 100.00% | 2000.00 | 100.00% | 2000.00 | 100.00% | 2000.00 |

**Table 8(b). 25% Reduced Sodium Tortilla Formulations**

| | 1 | | 4 | | 5 | |
|---|---|---|---|---|---|---|
| Batch Size (g) = 2000 | Control | | 25% Sodium Reduction + 1x Carnallite Salt Preparation | | 25% Sodium Reduction + 1.6x Carnallite Salt Preparation | |
| Ingredient | (%) | (gm) | (%) | (gm) | (%) | (gm) |
| Bread flour | 57.95% | 1159.00 | 57.93% | 1158.60 | 58.69% | 1173.80 |
| Water | 34.12% | 682.40 | 34.12% | 682.40 | 33.12% | 662.40 |
| Soybean Oil | 5.53% | 110.60 | 5.53% | 110.60 | 5.53% | 110.60 |
| Salt | 1.23% | 24.60 | 0.83% | 16.60 | 0.80% | 16.00 |
| Levn-Lite® SALP | 0.40% | 8.00 | 0.40% | 8.00 | 0.40% | 8.00 |
| Soda | 0.40% | 8.00 | 0.40% | 8.00 | 0.40% | 8.00 |
| Calcium Proprionate | 0.12% | 2.40 | 0.12% | 2.40 | 0.12% | 2.40 |
| Encapsulated Fumaric Acid | 0.25% | 5.00 | 0.25% | 5.00 | 0.25% | 5.00 |
| Carnallite Salt Preparation | 0.00% | 0.00 | 0.42% | 8.40 | 0.69% | 13.80 |
| Potassium Chloride | 0.00% | 0.00 | 0.00% | 0.00 | 0.00% | 0.00 |
| TOTAL | 100.00% | 2000.00 | 100.00% | 2000.00 | 100.00% | 2000.00 |

### Mixing and hold:

Dry ingredients (not water or oil) were mixed in a Hobart® A-120 mixer (Speed 1) with McDuffy™ bowl and dough pin for five (5) minutes. An appropriate amount of salt and/or replacer was added to create desired formulations (Tables 8(a) and 8(b)). The water and oil were added. The resulting dough was mixed for seven (7) minutes on Speed 2. The dough was held in a covered bowl for seven (7) minutes before forming.

### Form and grill:

55 g dough balls were formed and held for a hold time of from 5-10 minutes in a covered tray. The dough balls were pressed on Doughpro® dough press. Gap = 2. The top and bottom platen temperature was 340°F. Tortillas were cooked on griddle for 25 seconds per side on both sides (Griddle temperature = 400°F to 425°F). The tortillas were cooled on open wire rack at ambient temperature until cool (approximately five (5) minutes), and then bagged. They were then stored refrigerated until use.

Testing was done by a panel of professionally trained sensory panelists and by a panel of untrained sensory panelists. The panelists in both panels were instructed to score a number of sensory characteristics on a scale of 0-60. A control formulation was first tasted with the full sodium chloride content added and the proper point value anchored on the 60 point scale for each characteristic. The panelists were then provided with a number of blind formulations including a blind control. For each formulation, each of the panelists scored the characteristics versus the control. The tortillas were also tested for physical properties. The results were analyzed with a variety of statistical tests to determine their statistical significance.

The formulations tested were (1) control (no NaCl removed), (2) a 25% NaCl reduction with nothing added back, (3) a 25% NaCl reduction with and equal weight (1x) of KCl added back, (4) a 25% NaCl reduction with an equal weight (1x) of the Carnallite salt preparation of the present invention added back adjusted for NaCl in the Carnallite, (5) a 25% NaCl reduction with a weight of Carnallite salt preparation added back equal to 1.6 times (1.6x) the NaCl removed adjusted for NaCl in the Carnallite (Tables 8(a) and 8(b)).

The professional panelists reported that the no salt added back and the Carnallite added back formulations were noticeably slightly less salty than the control. The KCI added back formulation was not significantly less salty than the control. However, when compared directly to the KCI formulation, the Carnallite formulations were not significantly different.

The 1.6 times (1.6x) Carnallite salt preparation added back tortillas were perceived as slightly less tough than the control tortillas. They were also less tough than either the KCI added back tortillas or the no salt added back tortillas, but the difference had no practical effect. For aroma, chewiness, astringency, bitterness, sourness, metal/mineral taste, balance, and overall scores, the Carnallite salt preparation formulations were not significantly different from the control nor from the KCI added back formulations.

The untrained panelists were unable to distinguish any differences between any of the formulations for all of the characteristics.

The physical testing determined that none of the formulations had diameters that were significantly different from the control. However, the KCI added back formulation was about 1.7 units smaller than the nothing added back formulation. The nothing added back formulation was about 1.2 units heavier than the control formulation; otherwise, there were no observed differences between the formulations with respect to weight. The KCI formulation required a puncture force 0.1 units greater than the control, otherwise, no other differences between the formulations were observed with respect to puncture force. The 1.6 times (1.6x) Carnallite formulation was 2.2 units more in height than the nothing added back formulation, which was a significant increase in height, otherwise, no other differences between the formulas was observed with respect to height.

Unexpectedly, the Carnallite salt preparation formulations did not show statistically significant different water activities from the other formulations. This is significant because it is important in many foods-such as in preserved foods-to maintain a lowered water activity for preservative purposes. The Carnallite salt preparation of the invention contains a high fraction (for example 38%) of water of hydration and thus would be expected to perform more poorly on a weight basis than NaCl or KCI in controlling water activity due to its lower ionic content. Results of testing, however, showed no significant change in water activity when the Carnallite salt preparation replaced sodium chloride.

### Example 8: 25% NaCl Reduction Sausage Patties Formulations

**Table 9(a). 25% NaCl Reduction Breakfast Sausage Patties Formulations**

| | 1 | | 2 | | 3 | |
|---|---|---|---|---|---|---|
| Batch Size (g) = 1700 | Control | | 25% Sodium Reduction | | 25% Sodium Reduction + 1x KCI | |
| Ingredient | (%) | (qm) | (%) | (gm) | (%) | (gm) |
| 70% lean meat block | 92.50% | 1572.50 | 92.90% | 1579.30 | 92.50% | 1572.50 |
| Pork seasoning | 1.00% | 17.00 | 1.00% | 17.00 | 1.00% | 17.00 |
| Tap water | 5.00% | 85.00 | 5.00% | 85.00 | 5.00% | 85.00 |
| Salt, flour (not iodized) | 1.50% | 25.50 | 1.10% | 18.70 | 1.10% | 18.70 |
| Carnallite Salt Preparation | 0.00% | 0.00 | 0.00% | 0.00 | 0.00% | 0.00 |
| Potassium Chloride | 0.00% | 0.00 | 0.00% | 0.00 | 0.40% | 6.80 |
| TOTAL | 100.00% | 1700.00 | 100.00% | 1700.00 | 100.00% | 1700.00 |

**Table 9(b). 25% NaCl Reduction Breakfast Sausage Patties Formulations**

| | 1 | | 4 | | 5 | |
|---|---|---|---|---|---|---|
| Batch Size (g) = 1700 | Control | | 25% Sodium Reduction +1x Carnallite Salt Preparation | | 25% Sodium Reduction +1.6x Carnallite Salt Preparation | |
| Ingredient | (%) | (gm) | (%). | (gm) | (%) | (gm) |
| 70% lean meat block | 92.50% | 1572.50 | 92.50% | 1572.50 | 92.25% | 1568.25 |
| Pork seasoning | 1.00% | 17.00 | 1.00% | 17.00 | 1.00% | 17.00 |
| Tap water | 5.00% | 85.00 | 5.00% | 85.00 | 5.00% | 85.00 |
| Salt, flour (not iodized) | 1.50% | 25.50 | 1.08% | 18.36 | 1.07% | 18.19 |
| Carnallite Salt Preparation | 0.00% | 0.00 | 0.42% | 7.14 | 0.68% | 11.56 |
| Potassium Chloride | 0.00% | 0.00 | 0.00% | 0.00 | 0.00% | 0.00 |
| TOTAL | 100.00% | 1700.00 | 100.00% | 1700.00 | 100.00% | 1700.00 |

For this example, fresh lean coarse ground pork was obtained from a meat market. For each formulation (Tables 9(a) and 9(b)), the dry ingredients were combined and mixed well. The meat was spread across the bottom of a large mixing bowl and water was added to the meat which was then hand mixed for 30 seconds. The meat was re-spread across the bottom of the bowl and 1/3 of the dry mix blend was evenly distributed on top of the meat. The dry blend was hand mixed into meat for 30 seconds. This process was repeated two more times and the meat was then transferred to a Hobart® A200 grinder and ground through a fine 1/8" plate. The mixture was blended again for 30 seconds by hand and spread into patties.

No statistically definable sensory differences were seen between breakfast sausage formulations when tested either by the professionally trained or the untrained sensory panels. Physical evaluations of the breakfast sausage patties showed that the replacement of NaCl with the 1x Carnallite salt preparation was lower on yield and area force, an indication of strength of the cooked patty.

### Example 9: 35% Sodium Reduction in Chicken Patties

**Table 10(a). 35% Sodium Reduction Chicken Patties Formulations**

| | 1 | | 2 | | 3 | |
|---|---|---|---|---|---|---|
| Batch Size (g) = ∼2900 | Control | | 35% Sodium Reduction | | 35% Sodium Reduction + 1 x KCI | |
| Ingredient | (%) | (gm) | (%) | (gm) | (%) | (gm) |
| Ground breast meat, 95% lean | 93.55% | 2724.00 | 93.90% | 2724.00 | 93.55% | 2724.00 |
| Tap water | 5.37% | 156.63 | 5.40% | 156.63 | 5.38% | 156.63 |
| Salt, flour (not iodized) | 1.08% | 31.33 | 0.70% | 20.43 | 0.70% | 20.43 |
| Potassium Chloride | 0.00% | 0.00 | 0.00% | 0.00 | 0.37% | 10.90 |
| Carnallite Salt Preparation | 0.00% | 0.00 | 0.00% | 0.00 | 0.00% | 0.00 |
| TOTAL | 100.00% | 2912.00 | 100.00% | 2901.10 | 100.00% | 2912.00 |

**Table 10(b). 35% Reduced Sodium Chicken Patties Formulations**

| | 1 | | 4 | | 5 | |
|---|---|---|---|---|---|---|
| Batch Size (g) = ∼2900 | Control | | 35% Sodium Reduction +1x Carnallite Salt Preparation | | 35% Sodium Reduction +0.5x Carnallite Salt Preparation | |
| Ingredient | (%) | (gm) | (%) | (gm) | (%) | (gm) |
| Ground breast meat, 95% lean | 93.55% | 2724.00 | 93.55% | 2724.00 | 93.72% | 2724.00 |
| Tap water | 5.37% | 156.63 | 5.38% | 156.63 | 5.39% | 156.63 |
| Salt, flour (not iodized) | 1.08% | 31.33 | 0.70% | 20.43 | 0.70% | 20.43 |
| Potassium Chloride | 0.00% | 0.00 | 0.00% | 0.00 | 0.00% | 0.00 |
| Carnallite Salt Preparation | 0.00% | 0.00 | 0.37% | 10.90 | 0.19% | 5.45 |
| TOTAL | 100.00% | 2912.00 | 100.00% | 2912.00 | 100.00% | 2906.50 |

Testing was done by professionally trained sensory panelists. The panelists were instructed to score a number of sensory characteristics on a scale of 0-60. A control formulation was first tasted with the full sodium chloride content added and the proper point value anchored on the 60 point scale for each characteristic. The panelists were then provided with a number of blind formulations including a blind control. For each formulation, each of the panelists scored the characteristics versus the control. The results were analyzed with a variety of statistical tests to determine their statistical significance.

The formulations tested were (1) control (no NaCl removed), (2) a 35% NaCl reduction with nothing added back, (3) a 35% NaCl reduction with an equal weight (1x) of KCl added back, (4) a 35% NaCl reduction with an equal weight (1x) of the Carnallite salt preparation of the invention added back, adjusted for NaCl in the Carnallite, and (5) a 35% NaCl reduction with the weight of the Carnallite salt preparation added back equal to half of the weight (0.5x) of NaCl removed, adjusted for NaCl in the Carnallite (Tables 10(a) and 10(b)).

The panelists found that the nothing added back formulation was clearly less salty than the control. For both of the formulations using the Carnallite salt preparation of the invention the difference in saltiness versus the control was not significant. The panelists did not detect a difference in saltiness between the Carnallite salt preparation added back formulations and the KCl added back formulations. None of the Carnallite salt preparation formulations prepared were detectably different from the control in terms of astringency, bitterness, and metallic taste

Unexpectedly, physical testing results indicated that the water activity was similar for the control formulation and the 35% NaCl reduced formulation with 1x by weight replacement with the Carnallite salt preparation (Table 11). The Carnallite salt preparation of the invention contains a high fraction (for example 38%) of water of hydration and thus would be expected to perform more poorly on a weight basis than NaCl or KCI in controlling water activity due to its lower ionic content. Results of testing, however, showed no change in water activity when the Carnallite salt preparation replaced sodium chloride.

**Table 11. Chicken Patties Water Activity**

| Water Activity | | | | | |
|---|---|---|---|---|---|
| | Control | 35% Sodium Reduction | 35% Sodium Reduction + 1x KCl | 35% Sodium Reduction + 1x Carnallite Salt Preparation | 35% Sodium Reduction + 0.5x Carnallite Salt Preparation |
| Raw | 0.9785 | 0.9806 | 0.9820 | 0.9783 | 0.9778 |
| Cooked | 0.9617 | 0.9785 | 0.9780 | 0.9651 | 0.9756 |

### Example 10: 25% Sodium - NaCl Reduction in Snack Crackers

**Table 12(a). 25% Sodium - NaCl Reduction Snack Cracker Formulations**

| | 1 | 2 | 3 |
|---|---|---|---|
| | Control | 25% Sodium NaCl Reduction dough, no topical | 25% Sodium NaCl Reduction +1x Carnallite Salt Preparation dough and topical |
| Ingredients | Grams | | |
| Cookie Flour | 4,000 | 4,000 | 4,000 |
| Granulate Sugar | 320 | 320 | 320 |
| Non-fat Dry Milk | 60 | 60 | 60 |
| Nondiastatic Malt | 20 | 20 | 20 |
| NaCl | 40 | 30 | 30 |
| Carnallite Salt Preparation | 0 | 0 | 10 |
| Sodium Bicarbonate | 30 | 30 | 30 |
| All purpose shortening | 480 | 480 | 480 |
| Water (90 degrees F) | 1,120 | 1,120 | 1,120 |
| *Ammonium Bicarbonate | 40 | 40 | 40 |
| *Sodium Sulfite | 1.6 | 1.6 | 1.6 |
| Compressed Yeast | 10 | 10 | 10 |
| Topical Application | 100% Flake NaCl | No Topical | 75% Flake NaCl: 25% Carnallite Salt Preparation |

**Table 12(b). 25% Sodium-NaCl Reduction Snack Cracker Formulations**

| | 1 | 4 | 5 |
|---|---|---|---|
| | Control | 25% Sodium NaCl Reduction, no replacement in dough, 100% replacement of Sodium NaCl with 1x Carnallite Salt Preparation in Topical | 25% Sodium NaC Reduction, no replacement in dough 50% replacement of Sodium NaCl with Carnallite Salt Preparation in Topical |
| Ingredients | Grams | | |
| Cookie Flour | 4,000 | 4,000 | 4,000 |
| Granulate Sugar | 320 | 320 | 320 |
| Non-fat Dry Milk | 60 | 60 | 60 |
| Nondiastatic Malt | 20 | 20 | 20 |
| NaCl | 40 | 30 | 30 |
| Carnallite Salt Preparation | 0 | 0 | 0 |
| Sodium Bicarbonate | 30 | 30 | 30 |
| All Purpose Shortening | 480 | 480 | 480 |
| Water (90 degrees F) | 1,120 | 1,120 | 1,120 |
| *Ammonium Bicarbonate | 40 | 40 | 40 |
| *Sodium Sulfite | 1.6 | 1.6 | 1.6 |
| Compressed Yeast | 10 | 10 | 10 |
| Topical Application | 100% Flake NaCl | 100% Carnallite Salt Preparation | 50% Flake NaCl: 5 0 Carnallite Salt Preparation |

One sodium reduction strategy-to deliver equivalent sensory-is to apply NaCl and its replacement on the surface or topically deliver an immediate saltiness when the food is placed in the mouth. This strategy was tested with snack crackers. To prepare the crackers, all of the ingredients (Tables 12(a) and 12(b)) were added to a Hobart floor mixer with a hook attachment and mixed. The cracker dough was extruded and topical salt was applied with a salt applicator. The crackers were baked and then sprayed with oil with a target pickup of 10-12%.

Sensory testing was done by an untrained sensory panel. The panelists were instructed to score a number of sensory characteristics on a scale of 0-60. A control formulation was first tasted with the full sodium chloride content added and the proper point value anchored on the 60 point scale for each characteristic. The panelists were then provided with a number of blind formulations including a blind control. For each formulation, each of the panelists scored the characteristics versus the control. The results were analyzed with a variety of statistical tests to determine their statistical significance.

The formulations tested were (1) control (no NaCl removed), (2) 25% NaCl reduction dough, no topical, (3) 25% reduction +1x Carnallite in dough and topical, (4) 25% NaCl reduction, no replacement in dough, 100% replacement of NaCl with 1x Carnallite in Topical, and (5) 25% NaCl reduction, no replacement in dough, 50% replacement of NaCl with 1x Carnallite in Topical. (Tables 12(a) and 12(b)).

The untrained sensory panelists found that for saltiness, the no add back sample was less salty than the control. None of the other formulations were statistically significantly different. The 1x Carnallite salt preparation formulation, number 3, was almost equal in saltiness to the control. The 100% topical formulation was more astringent, bitter and metallic tasting than the control. No other formulations were significantly different from the control for these three characteristics.

The snack crackers were subjected to six separate evaluations by untrained sensory panels ranging in number from 5 - 12 panelists each. The observations of the six panels indicated that 50% of the panelist found that formula 3, 25% NaCl reduction plus 1x Carnallite salt preparation in dough and topical was saltier than the control.

**Table 13. Snack Cracker Physical Testing.**

| Batch | | Dough Thickness | Raw Wt., 10 w/o salt | Raw Wt., 10 w/salt | Baked Wt., 10 pieces | Stack Ht., 10 crackers | Moisture % |
|---|---|---|---|---|---|---|---|
| 1. | Control | 3 | Not measured | 38.7 | 34.8 | 58 | 1.8 |
| 2. | 25% NaCl Reduction dough, no topical | 3 | 35.2 | No topical | Not measured | Not measured | Not measure |
| 3. | 25% NaCl reduction +1x Carnallite Salt Preparation in dough and topical | 3 | 36.5 | 36.9 | 31.1 | 56 | 1.9 |
| 4. | 25% NaCl reduction, no replacement in dough, 100% replacement of NaCl with 1x Carnallite Salt Preparation in Topical | 3 | 35.2 | 35.4 | 31.7 | 57 | 1.2 |
| 5. | 25% NaCl reduction, no replacement in dough, 50% replacement of NaCl with 1x Carnallite Salt Preparation in Topical | 3 | 34.7 | 35.2 | 31.6 | 58 | 2.2 |

Physical data and production observation showed that there was no difference in the Carnallite salt preparation formulation with regards to mixing and dough handling. The stack height and moisture were also the same for the Carnallite salt preparation formulation 3 and the control.

## Claims

1. A food grade Carnallite salt preparation comprising a non-synthetic Carnallite that comprises less than 0.25% by weight of ammonia, and wherein the preparation comprises not greater than 20% sodium chloride by weight and not greater than 0.5% bromide by weight.

2. The food grade Carnallite salt preparation of claim 1, wherein the preparation comprises not greater than 10% sodium chloride by weight and not greater than 0.4% bromide by weight.

3. The food grade Carnallite salt preparation of claim 2, wherein the preparation comprises not greater than 7% sodium chloride by weight.

4. The food grade Carnallite salt preparation of claim 1, wherein the preparation comprises from 25% to 40% magnesium chloride by weight and from 20% to 30% potassium chloride by weight.

5. The food grade Carnallite salt preparation of claim 1, wherein the preparation comprises a water insoluble content of not greater than 0.3% by weight.

6. The food grade Carnallite salt preparation of claim 1 wherein the preparation is blended with one or more flow aids selected from the group consisting of silicon dioxide, calcium silicate, sodium aluminum silicate, and tricalcium phosphate.

7. A food grade Carnallite salt preparation according to claim 1 comprising a non-synthetic Carnallite that is substantially free of ammonia, wherein the preparation comprises not greater than 20% sodium chloride by weight, not greater than 0.5% bromide by weight, from 25% to 40% magnesium chloride by weight, from 20% to 30% potassium chloride by weight, not greater than 10 mg/kg of total organic carbon, not greater than 2 mg/kg of lead, not greater than 10 mg/kg of heavy metals, and a water insoluble content of not greater than 0.3% by weight.

8. An edible product comprising a food grade Carnallite salt preparation, wherein the food grade Carnallite salt preparation comprises a non-synthetic Carnallite that comprises less than 0.25% by weight of ammonia, and wherein the preparation comprises not greater than 20% sodium chloride by weight and not greater than 0.5% bromide by weight.

9. The edible product of claim 8, wherein the product is a food or beverage product, a pet food or animal feed, a nutraceutical, oral care product, dietary supplement, or pharmaceutical.

10. The edible product of claim 8, wherein the product is selected from the group consisting of baked goods, meats, poultry, seafood, processed fruits, processed vegetables, processed dairy and cheese products, frozen dough or batter, refrigerated dough or batter, desserts, confections, cheeses, butter, yogurt, sauces, dressings, gravies, snacks, soups, prepared foods, grain products, pasta and noodles, rice, chips, crackers, soft drinks, juices, sports drinks, yogurt drinks, flavored water, tea, dairy beverages, condiments, infant foods, diet foods, and geriatric foods, breads, cakes, cookies, muffins, pancakes, waffles, crepes, pizza, cold cuts, eggs and egg dishes, salad dressings, cereals, quickbreads, meat products, poultry products, seafood products, fruit preparations such as jams and jellies or smoothies, frozen or canned fruits, frozen or canned vegetables, table salt, spices, seasonings, throat lozenges, toothpaste, protein drinks, meal replacement beverages, mouthwash, healthcare nutrition-based products, pediatric supplements, geriatric supplements or vitamins.

11. The edible product of claim 8, wherein the edible product is a protein-based product and wherein the edible product comprises one or more phosphates selected from the group consisting of sodium phosphates, potassium phosphates, calcium phosphates, and mixed cation phosphates.

12. The edible product of claim 11, wherein the protein-based product is a meat product, poultry product, seafood product, flour product, dairy product, or soy product.

13. A method of preparing an edible product, the method comprising substituting at least part of the sodium chloride in the edible product recipe with a food grade Carnallite salt preparation comprising a non-synthetic Carnallite that is comprises less than 0.25% by weight of ammonia, wherein the preparation comprises not greater than 20% sodium chloride by weight and not greater than 0.5% bromide by weight.

14. The method of claim 13, wherein the sodium chloride in the product recipe is reduced by at least 25%.

15. The method of claim 13, wherein the edible product comprises one or more phosphates selected from the group consisting of sodium phosphates, potassium phosphates, calcium phosphates, and mixed cation phosphates.

16. The method of claim 13, wherein the edible product is selected from the group consisting of baked goods, meats, poultry, seafood, processed fruits, processed vegetables, processed dairy and cheese products, frozen dough or batter, refrigerated dough or batter, desserts, confections, cheeses, butter, yogurt, sauces, dressings, gravies, snacks, soups, prepared foods, grain products, pasta and noodles, rice, chips, crackers, soft drinks, juices, sports drinks, yogurt drinks, flavored water, tea, dairy beverages, condiments, infant foods, diet foods, and geriatric foods, breads, cakes, cookies, muffins, pancakes, waffles, crepes, pizza, cold cuts, eggs and egg dishes, salad dressings, cereals, quickbreads, meat products, poultry products, seafood products, fruit preparations such as jams and jellies or smoothies, frozen or canned fruits, frozen or canned vegetables, table salt, spices, seasonings, throat lozenges, toothpaste, protein drinks, meal replacement beverages, mouthwash, healthcare nutrition-based products, pediatric supplements, geriatric supplements or vitamins.

17. A salt blend comprising a Carnallite salt preparation and one or more of sodium chloride, potassium chloride, magnesium chloride, potassium sulfate, magnesium sulfate, flavor maskers, or flavor enhancers, wherein the Carnallite salt preparation comprises a non-synthetic Carnallite that is comprises less than 0.25% by weight of ammonia and the preparation comprises not greater than 0.5% bromide by weight, and wherein the Carnallite salt preparation contributes no more than 20% of its weight to the total sodium chloride content of the blend.

18. The salt blend of claim 17 comprising a ratio of from 99% sodium chloride to 1 % of a Carnallite salt preparation, by weight, to a ratio of from 1 % sodium chloride to 99% of a Carnallite salt preparation, by weight.

19. The salt blend of claim 17 wherein the blend comprises one or more flow aids selected from the group consisting of silicon dioxide, calcium silicate, sodium aluminum silicate, and tricalcium phosphate.

20. A process of producing a food grade Carnallite salt preparation, the process comprising the steps of transferring sea water from the Dead Sea into a first series of evaporation ponds, evaporating the sea water until sodium salts crystallize and precipitate to the bottom of the ponds, transferring the sea water to a second series of evaporation ponds, further evaporating the sea water until carnallite salts crystallize and precipitate to the bottom of the pond, separating the carnallite crystals from the sea salt solution, and washing the separated carnallite twice to obtain a food grade preparation.

## Patentansprüche

1. Carnallitsalzzubereitung in Lebensmittelqualität, die einen nicht-synthetischen Carnallit umfasst, der weniger als 0,25 Gew.-% Ammoniak umfasst, und wobei die Zubereitung nicht mehr als 20 Gew.-% Natriumchlorid und nicht mehr als 0,5 % Bromid umfasst.

2. Carnallitsalzzubereitung in Lebensmittelqualität nach Anspruch 1, wobei die Zubereitung nicht mehr als 10 Gew.-% Natriumchlorid und nicht mehr als 0,4 Gew.-% Bromid umfasst.

3. Carnallitsalzzubereitung in Lebensmittelqualität nach Anspruch 2, wobei die Zubereitung nicht mehr als 7 Gew.-% Natriumchlorid umfasst.

4. Carnallitsalzzubereitung in Lebensmittelqualität nach Anspruch 1, wobei die Zubereitung 25 Gew.-% bis 40 Gew.-% Magnesiumchlorid und 20 Gew.-% bis 30 Gew.-% Kaliumchlorid umfasst.

5. Carnallitsalzzubereitung in Lebensmittelqualität nach Anspruch 1, wobei die Zubereitung einen wasserunlöslichen Gehalt von nicht mehr als 0,3 Gew.-% umfasst.

6. Carnallitsalzzubereitung in Lebensmittelqualität nach Anspruch 1, wobei die Zubereitung mit einem oder mehreren Fließhilfsmitteln vermischt ist, die aus der Gruppe ausgewählt sind, bestehend aus Siliciumdioxid, Calciumsilikat, Natriumaluminiumsilikat und Tricalciumphosphat.

7. Carnallitsalzzubereitung in Lebensmittelqualität nach Anspruch 1, die einen nicht-synthetischen Carnallit umfasst, der im Wesentlichen ammoniakfrei ist, wobei die Zubereitung nicht mehr als 20 Gew.-% Natriumchlorid, nicht mehr als 0,5 Gew.-% Bromid, 25 Gew.-% bis 40 Gew.-% Magnesiumchlorid, 20 Gew.-% bis 30 Gew.-% Kaliumchlorid, nicht mehr als 10 mg/kg organischen Gesamtkohlenstoff, nicht mehr als 2 mg/kg Blei, nicht mehr als 10 mg/kg Schwermetalle und einen wasserunlöslichen Gehalt von nicht mehr als 0,3 Gew.-% umfasst.

8. Essbares Produkt, das eine Carnallitsalzzubereitung in Lebensmittelqualität umfasst, wobei die Carnallitsalzzubereitung in Lebensmittelqualität einen nicht-synthetischen Carnallit umfasst, der weniger als 0,25 Gew.-% Ammoniak umfasst, und wobei die Zubereitung nicht mehr als 20 Gew.-% Natriumchlorid und nicht mehr als 0,5 % Bromid umfasst.

9. Essbares Produkt nach Anspruch 8, wobei das Produkt ein Lebensmittel- oder Getränkeprodukt, ein Tierprodukt oder Tierfutter, ein Nutrazeutikum, ein Mundpflegeprodukt, ein Nahrungsergänzungsmittel oder ein Pharmazeutikum ist.

10. Essbares Produkt nach Anspruch 8, wobei das Produkt aus der Gruppe ausgewählt ist, bestehend aus Backwaren, Fleischwaren, Geflügel, Meerestieren, verarbeiteten Früchten, verarbeiteten Gemüsen, verarbeiteten Molkerei- und Käseprodukten, gefrorenem Teig oder Backteig, gekühltem Teig oder Backteig, Nachspeisen, Konfekten, Käsen, Butter, Joghurt, Saucen, Dressings, Bratensaucen, Snacks, Suppen, zubereiteten Lebensmitteln, Getreideprodukten, Pasta und Nudeln, Reis, Chips, Crackern, alkoholfreien Getränken, Säften, Sportgetränken, Joghurtgetränken, aromatisiertem Wasser, Tee, Molkereigetränken, Kondimenten, Lebensmitteln für Kleinkinder, Diätlebensmitteln und geriatrischen Lebensmitteln, Broten, Kuchen, Keksen, Muffins, Pfannkuchen, Waffeln, Crepes, Pizza, Aufschnitten, Eiern und Eigerichten, Saladdressings, Cerealien, Quick Breads, Fleischprodukten, Geflügelprodukten, Meerestierprodukten, Obstzubereitungen wie Marmeladen und Gelees oder Smoothies, gefrorenem Obst oder Obst in Dosen, gefrorenen Gemüsen oder Gemüsen in Dosen, Tafelsalz, Gewürzen, Würzmitteln, Halslutschtabletten, Zahnpasta, Proteingetränken, Mahlzeitersatzgetränken, Mundspülungen, Produkten auf Gesundheitsnahrungsmittelbasis, pädiatrischen Nahrungsergänzungsmitteln, geriatrischen Nahrungsergänzungsmitteln oder Vitaminen.

11. Essbares Produkt nach Anspruch 8, wobei das essbare Produkt ein Produkt auf Proteinbasis ist und wobei das essbare Produkt ein oder mehrere Phosphate umfasst, die aus der Gruppe ausgewählt sind, bestehend aus Natriumphosphaten, Kaliumphosphaten, Calciumphosphaten und gemischten Kationphosphaten.

12. Essbares Produkt nach Anspruch 11, wobei das Produkt auf Proteinbasis ein Fleischprodukt, Geflügelprodukt, Meerestierprodukt, Mehlprodukt, Molkereiprodukt oder Sojaprodukt ist.

13. Verfahren zum Herstellen eines essbaren Produkts, wobei das Verfahren das Ersetzen zumindest eines Teils des Natriumchlorids in der Rezeptur des essbaren Produkts durch eine Carnallitsalzzubereitung in Lebensmittelqualität umfasst, die einen nicht-synthetischen Carnallit umfasst, der weniger als 0,25 Gew.-% Ammoniak umfasst, wobei die Zubereitung nicht mehr als 20 Gew.-% Natriumchlorid und nicht mehr als 0,5 % Bromid umfasst.

14. Verfahren nach Anspruch 13, wobei das Natriumchlorid in der Produktrezeptur um zumindest 25 % verringert ist.

15. Verfahren nach Anspruch 13, wobei das essbare Produkt ein oder mehrere Phosphate umfasst, die aus der Gruppe ausgewählt sind, bestehend aus Natriumphosphaten, Kaliumphosphaten, Calciumphosphaten und gemischten Kationphosphaten.

16. Verfahren nach Anspruch 13, wobei das essbares Produkt aus der Gruppe ausgewählt ist, bestehend aus Backwaren, Fleischwaren, Geflügel, Meerestieren, verarbeiteten Früchten, verarbeiteten Gemüsen, verarbeiteten Molkerei- und Käseprodukten, gefrorenem Teig oder Backteig, gekühltem Teig oder Backteig, Nachspeisen, Konfekten, Käsen, Butter, Joghurt, Saucen, Dressings, Bratensaucen, Snacks, Suppen, zubereiteten Lebensmitteln, Getreideprodukten, Pasta und Nudeln, Reis, Chips, Crackern, alkoholfreien Getränken, Säften, Sportgetränken, Joghurtgetränken, aromatisiertem Wasser, Tee, Molkereigetränken, Kondimenten, Lebensmitteln für Kleinkinder, Diätlebensmitteln und geriatrischen Lebensmitteln, Broten, Kuchen, Keksen, Muffins, Pfannkuchen, Waffeln, Crepes, Pizza, Aufschnitten, Eiern und Eigerichten, Saladdressings, Cerealien, Quick Breads, Fleischprodukten, Geflügelprodukten, Meerestierprodukten, Obstzubereitungen wie Marmeladen und Gelees oder Smoothies, gefrorenem Obst oder Obst in Dosen, gefrorenen Gemüsen oder Gemüsen in Dosen, Tafelsalz, Gewürzen, Würzmitteln, Halslutschtabletten, Zahnpasta, Proteingetränken, Mahlzeitersatzgetränken, Mundspülungen, Produkten auf Gesundheitsnahrungsmittelbasis, pädiatrischen Nahrungsergänzungsmitteln, geriatrischen Nahrungsergänzungsmitteln oder Vitaminen.

17. Salzmischung, die eine Carnallitsalzzubereitung und ein oder mehreres von Natriumchlorid, Kaliumchlorid, Magnesiumchlorid, Kaliumsulfat, Magnesiumsulfat, geschmacksmaskierenden Mitteln oder Geschmacksverstärkern umfasst, wobei die Carnallitsalzzubereitung einen nicht-synthetischen Carnallit umfasst, der weniger als 0,25 Gew.-% Ammoniak umfasst, wobei die Zubereitung nicht mehr als 20 Gew.-% Natriumchlorid und nicht mehr als 0,5 % Bromid umfasst, und wobei die Carnallitsalzubereitung nicht mehr als 20 Gew.-% des Natriumchloridgesamtgehalts der Mischung ausmacht.

18. Salzmischung nach Anspruch 17, die ein Verhältnis von 99 Gew.-% Natriumchlorid zu 1 Gew.-% einer Carnallitsalzzubereitung bis zu einem Verhältnis von 1 Gew.-% Natriumchlorid zu 99 Gew.-% einer Carnallitsalzzubereitung umfasst.

19. Salzmischung nach Anspruch 17, wobei die Mischung ein oder mehrere Fließhilfsmittel umfasst, die aus der Gruppe ausgewählt sind, bestehend aus Siliciumdioxid, Calciumsilikat, Natriumaluminiumsilikat und Tricalciumphosphat.

20. Prozess zum Herstellen einer Carnallitsalzzubereitung in Lebensmittelqualität, wobei der Prozess die Schritte des Übertragens von Meereswasser aus dem Toten Meer in eine erste Reihe von Verdampfungsbecken, des Verdampfens des Meereswassers, bis Natriumsalze kristallisieren und auf den Boden der Becken ausfällen, des Übertragens des Meereswassers in eine zweite Reihe von Verdampfungsbecken, des weiteren Verdampfens des Meereswassers, bis Carnallitsalze kristallisieren und auf den Boden des Beckens ausfällen, des Trennens der Carnallitkristalle von der Meeressalzlösung und des Waschens des getrennten Carnallits zweimal, um eine Zubereitung in Lebensmittelqualität zu erhalten, umfasst.

## Revendications

1. Préparation de sel de carnallite de qualité alimentaire comprenant une carnallite non synthétique qui comprend moins de 0,25 % en poids d'ammoniac, laquelle préparation comprend au plus 20 % en poids de chlorure de sodium et au plus 0,5 % en poids de bromure.

2. Préparation de sel de carnallite de qualité alimentaire selon la revendication 1, laquelle préparation comprend au plus 10 % en poids de chlorure de sodium et au plus 0,4 % en poids de bromure.

3. Préparation de sel de carnallite de qualité alimentaire selon la revendication 2, laquelle préparation comprend au plus 7 % en poids de chlorure de sodium.

4. Préparation de sel de carnallite de qualité alimentaire selon la revendication 1, laquelle préparation comprend 25 % à 40 % en poids de chlorure de magnésium et 20 % à 30 % en poids de chlorure de potassium.

5. Préparation de sel de carnallite de qualité alimentaire selon la revendication 1, laquelle préparation a une teneur en composés insolubles dans l'eau ne dépassant pas 0,3 % en poids.

6. Préparation de sel de carnallite de qualité alimentaire selon la revendication 1, laquelle préparation est mélangée avec un ou plusieurs auxiliaires de fluidité choisis dans le groupe constitué par le dioxyde de silicium, le silicate de calcium, le silicate de sodium et d'aluminium, et le phosphate tricalcique.

7. Préparation de sel de carnallite de qualité alimentaire selon la revendication 1, comprenant une carnallite non synthétique qui est pratiquement exempte d'ammoniac, laquelle préparation comprend au plus 20 % en poids de chlorure de sodium, au plus 0,5 % en poids de bromure, 25 % à 40 % en poids de chlorure de magnésium, 20 % à 30 % en poids de chlorure de potassium, au plus 10 mg/kg de carbone organique total, au plus 2 mg/kg de plomb, au plus 10 mg/kg de métaux lourds, et ayant une teneur en composés insolubles dans l'eau ne dépassant pas 0,3 % en poids.

8. Produit comestible comprenant une préparation de sel de carnallite de qualité alimentaire, dans lequel la préparation de sel de carnallite de qualité alimentaire comprend une carnallite non synthétique qui comprend moins de 0,25 % en poids d'ammoniac, et dans lequel la préparation comprend au plus 20 % en poids de chlorure de sodium et au plus 0,5 % en poids de bromure.

9. Produit comestible selon la revendication 8, lequel produit est un aliment ou une boisson, un aliment pour animaux de compagnie ou un aliment pour animaux, un agent nutraceutique, un produit d'hygiène buccale, un complément alimentaire, ou un agent pharmaceutique.

10. Produit comestible selon la revendication 8, lequel produit est choisi dans le groupe constitué par les produits de boulangerie, les viandes, la volaille, les poissons et fruits de mer, les fruits transformés, les légumes transformés, les produits laitiers et fromages transformés, les pâtes ou pâtes à frire congelées, les pâtes ou pâtes à frire réfrigérées, les desserts, les bonbons, les fromages, le beurre, les yaourts, les sauces, les vinaigrettes, les bouillons, les encas, les soupes, les aliments préparés, les produits céréaliers, les pâtes et nouilles, le riz, les frites, les crackers, les boissons sans alcool, les jus, les boissons énergétiques, les yaourts à boire, les eaux aromatisées, le thé, les boissons lactées, les condiments, les aliments pour nourrissons, les aliments de régime, et les aliments à usage gériatrique, les pains, les gâteaux, les cookies, les muffins, les pancakes, les gaufres, les crêpes, les pizzas, les viandes froides et charcuteries, les oeufs et les oeufs au plat, les sauces de salade, les céréales, les pains rapides, les produits carnés, les produits à base de volaille, les produits à base de poissons et fruits de mer, les préparations de fruits telles que les confitures et les gelées et les frappés, les fruits congelés ou en conserve, les légumes congelés ou en conserve, le sel de table, les épices, les assaisonnements, les pastilles pour la gorge, les pâtes dentifrices, les boissons protéinées, les boissons substituts de repas, les bains de bouche, les produits basés sur la nutrition de soins de santé, les compléments pédiatriques, les compléments gériatriques, et les vitamines.

11. Produit comestible selon la revendication 8, lequel produit comestible est un produit à base de protéines, et lequel produit comestible comprend un ou plusieurs phosphates choisis dans le groupe constitué par les phosphates de sodium, les phosphates de potassium, les phosphates de calcium, et les phosphates de cations mixtes.

12. Produit comestible selon la revendication 11, dans lequel le produit à base de protéines est un produit carné, un produit à base de volaille, un produit à base de poissons et de fruits de mer, un produit à base de farine, un produit laitier, ou un produit à base de soja.

13. Procédé pour préparer un produit comestible, lequel procédé comprend le remplacement d'au moins une partie du chlorure de sodium dans la recette du produit comestible par une préparation de sel de carnallite de qualité alimentaire comprenant une carnallite non synthétique qui comprend moins de 0,25 % en poids d'ammoniac, dans lequel la préparation comprend au plus 20 % en poids de chlorure de sodium et au plus 0,5 % en poids de bromure.

14. Procédé selon la revendication 13, dans lequel le chlorure de sodium dans la recette du produit est réduit d'au moins 25 %.

15. Procédé selon la revendication 13, dans lequel le produit comestible comprend un ou plusieurs phosphates choisis dans le groupe constitué par les phosphates de sodium, les phosphates de potassium, les phosphates de calcium, et les phosphates de cations mixtes.

16. Procédé selon la revendication 13, dans lequel le produit comestible est choisi dans le groupe constitué par les produits de boulangerie, les viandes, la volaille, les poissons et fruits de mer, les fruits transformés, les légumes transformés, les produits laitiers et fromages transformés, les pâtes ou pâtes à frire congelées, les pâtes ou pâtes à frire réfrigérées, les desserts, les bonbons, les fromages, le beurre, les yaourts, les sauces, les vinaigrettes, les bouillons, les encas, les soupes, les aliments préparés, les produits céréaliers, les pâtes et nouilles, le riz, les frites, les crackers, les boissons sans alcool, les jus, les boissons énergétiques, les yaourts à boire, les eaux aromatisées, le thé, les boissons lactées, les condiments, les aliments pour nourrissons, les aliments de régime, et les aliments à usage gériatrique, les pains, les gâteaux, les cookies, les muffins, les pancakes, les gaufres, les crêpes, les pizzas, les viandes froides et charcuteries, les oeufs et les oeufs au plat, les sauces de salade, les céréales, les pains rapides, les produits carnés, les produits à base de volaille, les produits à base de poissons et fruits de mer, les préparations de fruits telles que les confitures et les gelées et les frappés, les fruits congelés ou en conserve, les légumes congelés ou en conserve, le sel de table, les épices, les assaisonnements, les pastilles pour la gorge, les pâtes dentifrices, les boissons protéinées, les boissons substituts de repas, les bains de bouche, les produits basés sur la nutrition de soins de santé, les compléments pédiatriques, les compléments gériatriques, et les vitamines.

17. Mélange de sels comprenant une préparation de sel de carnallite et un ou plusieurs parmi le chlorure de sodium, le chlorure de potassium, le chlorure de magnésium, le sulfate de potassium, le sulfate de magnésium, les masqueurs de goût, et les renforçateurs de goût, dans lequel la préparation de sel de carnallite comprend une carnallite non synthétique qui comprend moins de 0,25 % en poids d'ammoniac et la préparation comprend au plus 0,5 % en poids de bromure, et dans lequel la préparation de sel de carnallite contribue à au plus 20 % de son poids à la teneur totale en chlorure de sodium du mélange.

18. Mélange de sels selon la revendication 17, comprenant un rapport en poids allant de 99 % de chlorure de sodium sur 1 % de préparation de sel de carnallite à un rapport en poids de 1 % de chlorure de sodium sur 99 % de préparation de sel de carnallite.

19. Mélange de sels selon la revendication 17, lequel mélange comprend un ou plusieurs auxiliaires de fluidité choisis dans le groupe constitué par le dioxyde de silicium, le silicate de calcium, l'aluminosilicate de sodium, et le phosphate tricalcique.

20. Procédé pour préparer une préparation de sel de carnallite de qualité alimentaire, lequel procédé comprend les étapes consistant à transférer de l'eau de mer provenant de la mer Morte dans une première série de bassins d'évaporation, évaporer l'eau de mer jusqu'à ce que les sels de sodium cristallisent et précipitent au fond des bassins, transférer l'eau de mer dans une deuxième série de bassins d'évaporation, encore évaporer l'eau de mer jusqu'à ce que les sels de carnallite cristallisent et précipitent au fond du bassin, séparer les cristaux de carnallite à partir de la solution de sel de mer, et laver la carnallite séparée deux fois pour obtenir une préparation de qualité alimentaire.
